(19) Europäisches Patentamt / European Patent Office / Office européen des brevets

(11) **EP 3 318 533 A1**

(12) **EUROPEAN PATENT APPLICATION**
published in accordance with Art. 153(4) EPC

(43) Date of publication:
**09.05.2018 Bulletin 2018/19**

(51) Int Cl.:
**C01B 39/54** (2006.01)    **B01D 53/94** (2006.01)
**F01N 3/10** (2006.01)

(21) Application number: **16817853.1**

(22) Date of filing: **27.06.2016**

(86) International application number:
**PCT/JP2016/068959**

(87) International publication number:
**WO 2017/002745 (05.01.2017 Gazette 2017/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **02.07.2015 JP 2015133637**

(71) Applicant: **MITSUBISHI CHEMICAL CORPORATION**
**Tokyo 100-8251 (JP)**

(72) Inventors:
• **HOTTA, Yuusuke**
  **Tokyo 100-8251 (JP)**
• **TAKEWAKI, Takahiko**
  **Tokyo 100-8251 (JP)**
• **MATSUO, Takeshi**
  **Tokyo 100-8251 (JP)**
• **KIYONO, Kenichi**
  **Tokyo 100-8251 (JP)**

(74) Representative: **Hoffmann Eitle**
**Patent- und Rechtsanwälte PartmbB**
**Arabellastraße 30**
**81925 München (DE)**

(54) **COPPER-SUPPORTED ZEOLITE AND EXHAUST-GAS PURIFICATION TREATMENT CATALYST CONTAINING SAID ZEOLITE**

(57) Provided is a copper-supported SAPO having good performance as a catalyst and an adsorbent and having not only good high-temperature water-vapor durability, which is usually provided to silicoaluminophosphate zeolites (SAPO), but also good low-temperature water-vapor durability. A copper-supported zeolite comprising a zeolite having a framework structure that contains at least silicon atoms, phosphorus atoms, and aluminum atoms, and copper supported on the zeolite, wherein the copper-supported zeolite satisfies (1) to (3) below: (1) an amount of copper (in terms of copper atoms) supported on the copper-supported zeolite is 1.5% by weight or more and 3.5% by weight or less, (2) the copper-supported zeolite has an UV-Vis-NIR absorption intensity ratio of less than 0.35 as determined by a formula (I) below: Intensisty (22,000 cm$^{-1}$)/Intensity (12,500 cm$^{-1}$) ... (I), and (3) a silicon atom content of the copper-supported zeolite satisfies a formula (II) below: $0.07 \leq x \leq 0.11$ ... (II) where x represents a ratio of the number of moles of the silicon atoms to the total number of moles of the silicon atoms, the aluminum atoms, and the phosphorus atoms contained in the framework structure of the copper-supported zeolite.

Fig. 1

**Description**

Technical Field

The present invention relates to a copper-supported silicoaluminophosphate zeolite suitable as a catalyst used in a selective catalytic reaction (SCR) of NOx contained in automobile exhaust gas or the like, a direct NOx removal catalyst, a petrochemical catalyst, or an adsorbent that adsorbs water vapor or the like, and an exhaust gas purification catalyst that includes the same.

Background Art

Copper-supported zeolites that are obtained by supporting copper on a zeolite having a framework structure that contains at least silicon atoms, phosphorus atoms, and aluminum atoms (the zeolite may be referred to as a "silicoaluminophosphate zeolite, SAPO") (hereinafter, the copper-supported zeolites may be referred to as "copper-supported SAPO") have an advantage of, for example, an effect of improving catalytic activity due to copper. The copper-supported SAPO is used in various fields such as a chemical industry and purification of automobile exhaust gas (PTL 1). There has been an increasing demand for SCR catalysts for exhaust gas discharged from internal combustion engines such as diesel engines, and the application of the copper-supported SAPO to the SCR catalysts has been studied. In diesel cars, a catalyst adsorbs water when a low-temperature gas that contains water vapor flows, for example, during idling, and the catalyst desorbs the water with an increase in the temperature. Therefore, there has been a desire for catalysts that do not deteriorate even when the catalysts repeatedly adsorb and desorb water.

The copper-supported SAPO has good catalytic activity in a low-temperature region of 200°C or lower and good high-temperature water-vapor durability. However, the copper-supported SAPO has insufficient durability for repeated adsorption and desorption of water vapor in the low-temperature region (hereinafter, referred to as "low-temperature water-vapor durability").

Fig. 4 of NPL 1 shows a chart of an absorption intensity measured by ultraviolet-visible-near infrared spectroscopy (UV-Vis-NIR) of a copper-supported zeolite having a CHA structure. In the chart, the peak at a wavenumber of about 12,500 cm$^{-1}$ is an absorption peak due to a charge transition between the d orbitals of divalent copper ions. Table 8 in NPL 2 discloses that a peak at a wavenumber of about 22,000 cm$^{-1}$ in a chart of an absorption intensity measured by UV-Vis-NIR of a copper-supported zeolite having a CHA structure is an absorption peak attributable to $[Cu_2(\mu\text{-}O)]^{2+}$ Mono($\mu$-OXO)dicopper (hereinafter, referred to as a "dimer").

PTL 1: International Publication No. WO2013/002059A1
NPL 1: Journal of Catalysis 312 (2014) 87-89
NPL 2: Dalton Transactions, 2013, 42, 12741-12761

Although the copper-supported SAPO produced by a one-pot synthesis method and disclosed in PTL 1 has improved low-temperature water-vapor durability compared with an existing copper-supported SAPO, higher low-temperature water-vapor durability has been desired.

Summary of Invention

An object of the present invention is to provide a copper-supported SAPO having good performance as a catalyst and an adsorbent and having not only good high-temperature water-vapor durability, which is usually provided to silicoaluminophosphate zeolites (SAPO), but also good low-temperature water-vapor durability.

The inventors of the present invention conducted studies as described below in order to solve the problems described above.

In general, in a chart of an absorption intensity measured by UV-Vis-NIR of a copper-supported SAPO, two peaks attributable to divalent copper ions and dimers are observed at a wavenumber of about 12,500 cm$^{-1}$ and a wavenumber of about 22,000 cm$^{-1}$, respectively, as in NPL 1 and NPL 2. The divalent copper ions presumably adsorb on the acid sites of the zeolite and contribute to the activity of the catalyst. The dimers are presumably formed by oxidation of some of copper ions that have been adsorbed on the acid sites or copper ions that are not adsorbed on the acid sites.

The inventors of the present invention focused on absorption intensities at particular two wavenumbers, the absorption intensities being measured by UV-Vis-NIR of a copper-supported zeolite, and conducted extensive studies. As a result, it was found that a copper-supported zeolite having a ratio of UV-Vis-NIR absorption intensities at the two wavenumbers within a particular range, an amount of copper supported within a particular range, and a silicon atom content within a particular range exhibits good low-temperature water-vapor durability.

Specifically, the gist of the present invention lies in [1] to [8] described below.

[1] A copper-supported zeolite including a zeolite having a framework structure that contains at least silicon atoms, phosphorus atoms, and aluminum atoms, and copper supported on the zeolite, in which the copper-supported zeolite satisfies (1) to (3) below.

(1) An amount of copper (in terms of copper atoms) supported on the copper-supported zeolite is 1.5% by weight or more and 3.5% by weight or less.
(2) The copper-supported zeolite has an UV-Vis-NIR absorption intensity ratio of less than 0.35 as determined by a formula (I) below.

$$\text{Intensity } (22,000 \text{ cm}^{-1})/\text{Intensity } (12,500 \text{ cm}^{-1}) \quad \cdots \text{ (I)}$$

(3) A silicon atom content of the copper-supported zeolite satisfies a formula (II) below:

$$0.07 \leq x \leq 0.11 \quad \cdots \text{ (II)}$$

where x represents a ratio of the number of moles of the silicon atoms to the total number of moles of the silicon atoms, the aluminum atoms, and the phosphorus atoms contained in the framework structure of the copper-supported zeolite.

[2] The copper-supported zeolite according to [1], in which the UV-Vis-NIR absorption intensity ratio is less than 0.30.
[3] The copper-supported zeolite according to [1], in which the UV-Vis-NIR absorption intensity ratio is less than 0.20.
[4] The copper-supported zeolite according to any one of [1] to [3], in which the copper-supported zeolite has a specific surface area of 570 $m^2$/g or more as measured by a BET one-point method.
[5] The copper-supported zeolite according to any one of [1] to [3], in which the copper-supported zeolite has a specific surface area of 600 $m^2$/g or more as measured by a BET one-point method.
[6] The copper-supported zeolite according to any one of [1] to [5], in which the copper-supported zeolite has a zeolite structure having a framework density of not less than 10.0 T/1,000 $Å^3$ and not more than 16.0 T/1,000 $Å^3$, the zeolite structure being defined by the International Zeolite Association (IZA).
[7] The copper-supported zeolite according to any one of [1] to [6], in which the copper-supported zeolite has a zeolite structure being CHA, the zeolite structure being defined by the International Zeolite Association (IZA).
[8] An exhaust gas purification catalyst including the copper-supported zeolite according to any one of [1] to [7].
Advantageous Effects of Invention

According to the present invention, there is provided a copper-supported zeolite having good low-temperature water-vapor durability and good purification performance of nitrogen oxides contained in exhaust gas or the like.

Brief Description of Drawings

[Fig. 1] Fig. 1 is a chart showing an exhaust gas purification performance of a copper-supported zeolite of Example 3 before and after a low-temperature water-vapor durability test.
[Fig. 2] Fig. 2 is a chart showing an exhaust gas purification performance of a copper-supported zeolite of Comparative Example 1 before and after a low-temperature water-vapor durability test.
[Fig. 3] Fig. 3 is a chart showing absorption intensities of the copper-supported zeolites of Example 3 and Comparative Example 1 in a wavenumber range of 8,000 to 23,000 $cm^{-1}$.

Description of Embodiments

Embodiments of the present invention will now be described in detail. The description below is merely an example (typical example) of the embodiments of the present invention and does not limit the present invention.

[Copper-supported zeolite]

A copper-supported zeolite of the present invention (hereinafter, may be simply referred to as a "copper-supported zeolite") is a zeolite including a zeolite having a framework structure that contains at least silicon atoms, phosphorus atoms, and aluminum atoms, and copper supported on the zeolite, in which the copper-supported zeolite satisfies (1) to (3) below.

(1) An amount of copper (in terms of copper atoms) supported on the copper-supported zeolite is 1.5% by weight or more and 3.5% by weight or less.
(2) The copper-supported zeolite has an UV-Vis-NIR absorption intensity ratio of less than 0.35 as determined by a formula (I) below.

$$\text{Intensity (22,000 cm}^{-1}\text{)/Intensity (12,500 cm}^{-1}\text{)} \cdots$$

(I)

(3) A silicon atom content of the copper-supported zeolite satisfies a formula (II) below:

$$0.07 \leq x \leq 0.11 \cdots \text{(II)}$$

where x represents a ratio of the number of moles of the silicon atoms to the total number of moles of the silicon atoms, the aluminum atoms, and the phosphorus atoms contained in the framework structure of the copper-supported zeolite.

The copper-supported zeolite of the present invention has good low-temperature water-vapor durability. Accordingly, even when the copper-supported zeolite repeats adsorption and desorption of water at a low temperature, a decrease in the catalyst performance is very small, and the copper-supported zeolite can be used for a long period. The copper-supported zeolite of the present invention is particularly suitable as SCR catalysts.

When the ultraviolet-visible-near infrared spectroscopy (UV-Vis-NIR) absorption intensity ratio (hereinafter, may be referred to as an "absorption intensity ratio (I)") as determined from the formula (I) is less than 0.35, the copper-supported zeolite has good low-temperature water-vapor durability. The absorption intensity ratio (I) is preferably less than 0.30 because the low-temperature water-vapor durability is further improved. The absorption intensity ratio (I) is more preferably less than 0.20 because the low-temperature water-vapor durability is still further improved. When the absorption intensity ratio (I) is greater than 0.35, the ratio of the dimer increases, and the low-temperature water-vapor durability tends to decrease. The lower limit of the absorption intensity ratio (I) is preferably zero, that is, the amount of the dimer is preferably zero.

The UV-Vis-NIR absorption intensity of the copper-supported zeolite is specifically measured by the method described in Examples below.

When the amount of copper supported on the copper-supported zeolite is 1.5% by weight or more, a high NOx purification performance is achieved. When the amount of copper supported on the copper-supported zeolite is 3.5% by weight or less, copper tends to adsorb only on the acid sites in the zeolite framework to achieve high low-temperature water-vapor durability.

The amount of copper supported on the copper-supported zeolite is a ratio of the weight of copper to the weight of the copper-supported zeolite in an anhydrous state. When the copper-supported zeolite contains a template, the above amount of copper refers to a copper content of a copper-supported zeolite that does not contain the template.

The term "copper" in the present invention covers a present state in which copper is supported in a zeolite and a present state in which copper is present as an ionic species or another species.

The amount of copper (W1 (% by weight)) supported on the copper-supported zeolite can be determined by X-ray fluorescence analysis (XRF). Specifically, a calibration curve is prepared by the method described below, and the amount of copper can be determined from the calibration curve.

[Preparation of calibration curve]

Three or more copper-supported zeolites that support copper in different amounts are used as standard samples. The standard samples are each dissolved under heating in an aqueous solution of an acid such as hydrochloric acid, and an amount of copper atoms (% by weight) supported is then determined by inductively coupled plasma (ICP) emission spectral analysis. A fluorescence X-ray intensity of copper of each of the standard samples is determined by XRF. Thus, a calibration curve showing the relationship between the amount of copper atoms supported and the fluorescence X-ray intensity is prepared.

A fluorescence X-ray intensity of a copper-supported zeolite sample is measured by XRF. The amount of copper atoms W1 (% by weight) supported is determined by using the calibration curve.

A moisture content $W_{H2O}$ (% by weight) in the sample is determined by thermogravimetry (TG). An amount of copper atoms W (% by weight) supported in the anhydrous state is calculated by a formula (III) below.

$$W = W1/(1 - W_{H2O}) \cdots (III)$$

When the silicon atom content of the copper-supported zeolite satisfies the formula (II) above, a copper-supported zeolite having high low-temperature water-vapor durability is obtained.

A copper-supported zeolite that satisfies x > 0.11 has low low-temperature water-vapor durability. Regarding a copper-supported zeolite that satisfies x < 0.07, it is difficult for the copper-supported zeolite to form a zeolite framework structure such as a zeolite CHA structure.

x is preferably 0.08 or more, and more preferably 0.085 or more, and preferably 0.105 or less, and more preferably 0.10 or less.

Ratios of aluminum atoms and phosphorus atoms contained in the framework structure of the copper-supported zeolite preferably satisfy a formula (IV) and a formula (V) below, respectively.

$$0.3 \le y \le 0.6 \cdots (IV)$$

In the formula, y represents a ratio of the number of moles of the aluminum atoms to the total number of moles of the silicon atoms, the aluminum atoms, and the phosphorus atoms contained in the zeolite framework structure.

$$0.3 \le z \le 0.6 \cdots (V)$$

In the formula, z represents a ratio of the number of moles of the phosphorus atoms to the total number of moles of the silicon atoms, the aluminum atoms, and the phosphorus atoms contained in the zeolite framework structure.

y is usually 0.3 or more, preferably 0.35 or more, and more preferably 0.4 or more, and usually 0.6 or less, and preferably 0.55 or less. When the value of y is smaller than the lower limit value or greater than the upper limit value, the amount of impurities in the copper-supported zeolite tends to increase.

z is usually 0.3 or more, preferably 0.35 or more, and more preferably 0.4 or more, and usually 0.6 or less, preferably 0.55 or less, and more preferably 0.50 or less. When the value of z is smaller than the lower limit value, the amount of impurities in the copper-supported zeolite tends to increase. When the value of z is greater than the upper limit value, zeolite crystallization may be unlikely to occur.

The content of atoms in the zeolite framework structure of the copper-supported zeolite can be determined by dissolving a sample under heating in an aqueous solution of an acid such as hydrochloric acid, and performing ICP emission spectral analysis of the resulting sample.

A specific surface area of the copper-supported zeolite as measured by a BET one-point method is preferably 570 $m^2$/g or more because higher low-temperature water-vapor durability is achieved, and particularly preferably 600 $m^2$/g or more. The upper limit of the specific surface area is not particularly limited but is usually 700 $m^2$/g or less.

The copper-supported zeolite has a zeolite structure having a framework density of usually not less than 10.0 T/1,000 $Å^3$, and preferably not less than 11.0 T/1,000 $Å^3$, and usually not more than 17.0 T/1,000 $Å^3$, and preferably not more than 16.0 T/1,000 $Å^3$, the zeolite structure being defined by the International Zeolite Association (IZA). The copper-supported zeolite having a framework density in the above range can be suitably used as an exhaust gas purification catalyst and a water vapor adsorbent.

When the framework density is less than the lower limit value, the zeolite structure may become unstable, and durability tends to decrease. When the framework density exceeds the upper limit value, the amount of adsorption and catalytic activity may decrease, and the copper-supported zeolite may not be suitable for use as a catalyst. Preferably, the framework density is not less than 10.0 T/1,000 $Å^3$ and not more than 16.0 T/1,000 $A^3$.

The framework density (T/1,000 $Å^3$) means the number of T atoms (atoms constituting the framework structure of a zeolite, the atoms being other than oxygen atoms) present per unit volume 1,000 $Å^3$ of a zeolite. This value is determined depending on the structure of the zeolite.

The structure of the copper-supported zeolite is determined by X-ray diffraction (XRD). The copper-supported zeolite has a structure of AEI, AFR, AFS, AFT, AFX, AFY, AHT, CHA, DFO, ERI, FAU, GIS, LEV, LTA, or VFI and preferably a structure of AEI, AFX, GIS, CHA, VFI, AFS, LTA, FAU, or AFY in terms of the codes defined by the IZA. Of these, a zeolite having the CHA structure is most preferred and can be suitably used as an exhaust gas purification catalyst and a water vapor adsorbent.

The particle size of the copper-supported zeolite is not particularly limited but is usually 0.1 $\mu$m or more, preferably 1 $\mu$m or more, and more preferably 3 $\mu$m or more, and usually 30 $\mu$m or less, preferably 20 $\mu$m or less, and more preferably 15 $\mu$m or less.

The term "particle size of a copper-supported zeolite" in the present invention refers to an average of a primary particle size of a zeolite particle at arbitrary 10 to 30 points when a copper-supported zeolite is observed with an electron microscope.

[Method for producing copper-supported zeolite]

The copper-supported zeolite of the present invention may be produced by any of a method (1) and a method (2) described below using an aluminum atom source material, a phosphorus atom source material, a silicon atom source material, and as required, a template and is preferably produced by the method (2).

(1) A silicoaluminophosphate zeolite containing aluminum atoms, phosphorus atoms, and silicon atoms is prepared by hydrothermal synthesis, and copper is then supported by an ordinary method such as an ion exchange method or an impregnation method.
(2) In hydrothermal synthesis of a silicoaluminophosphate zeolite containing aluminum atoms, phosphorus atoms, and silicon atoms, a copper atom source material is added, to thereby synthesize a copper-supported zeolite.

In particular, in order to produce the copper-supported zeolite of the present invention having an absorption intensity ratio (I) of less than 0.35, a copper-supported zeolite prepared by hydrothermal synthesis is preferably subjected to a steam treatment under particular conditions.

Hereinafter, as an example of a method for producing a copper-supported zeolite, a description will be given of a method including producing a copper-supported zeolite by adding a copper atom source material in hydrothermal synthesis of a zeolite containing aluminum atoms, phosphorus atoms, and silicon atoms (silicoaluminophosphate zeolite) by using an aluminum atom source material, a phosphorus atom source material, a silicon atom source material, and as required, a template; and subsequently subjecting the copper-supported zeolite to a steam treatment.

[Preparation of aqueous gel]

A silicon atom source material, an aluminum atom source material, a phosphorus atom source material, a copper atom source material, as required, a template, and water are mixed to prepare an aqueous gel. The order of mixing of the source materials in the preparation of the aqueous gel is not limited and may be appropriately selected depending on the conditions used. Usually, first, a copper atom source material is mixed with a phosphorus atom source material, and water, an aluminum atom source material, a silicon atom source material, and as required, a template are added to the resulting mixture. Mixing a phosphorus atom source material and a copper atom source material in advance is preferable from the viewpoint of a production method because the copper atom source material can be uniformly dispersed in the resulting aqueous gel. Mixing a phosphorus atom source material and a copper atom source material in advance is preferable because the resulting copper-supported zeolite has good performance when used as a catalyst or an adsorbent.

<Aluminum atom source material>

The aluminum atom source material is not particularly limited. For example, pseudo-boehmite, aluminum alkoxides such as aluminum isopropoxide and aluminum triethoxide, aluminum hydroxide, alumina sols, and sodium aluminate are usually used. These may be used alone or as a mixture of two or more thereof. The aluminum atom source material is preferably pseudo-boehmite from the viewpoint of the ease of handling and high reactivity.

<Silicon atom source material>

The silicon atom source material is not particularly limited. For example, fumed silica, silica sols, colloidal silica, liquid glass, ethyl silicate, and methyl silicate are usually used. These may be used alone or as a mixture of two or more thereof. The silicon atom source material is preferably fumed silica from the viewpoint of high purity and high reactivity.

<Phosphorus atom source material>

The phosphorus atom source material is usually phosphoric acid. Alternatively, aluminum phosphate may be used. The phosphorus atom source materials may be used alone or as a mixture of two or more thereof.

<Copper atom source material>

The copper atom source material supported on a zeolite is not particularly limited. For example, colloidal oxides and fine powder-like oxides of copper; inorganic acid salts, such as a sulfate, a nitrate, a phosphate, a chloride, and a bromide, of copper; organic acid salts, such as an acetate, an oxalate, and a citrate, of copper; and organometallic compounds such as pentacarbonyl and ferrocene are usually used. Of these, inorganic acid salts and organic acid salts are preferable from the viewpoint of solubility in water.

The copper atom source material is preferably copper(II) oxide or copper(II) acetate, and more preferably copper(II) oxide.

<Template>

The template may be an amine, an imine, or a quaternary ammonium salt, which is generally used as a template in the production of zeolite. The template is preferably at least one compound selected from the group consisting of the below (1)-(5). These compounds are easily available and inexpensive and are suitable because the resulting silicoaluminophosphate zeolite is easy to handle and rarely undergoes structural disorders.

(1) alicyclic heterocyclic compounds containing a nitrogen atom as a heteroatom,
(2) amines having an alkyl group (alkylamines),
(3) amines having a cycloalkyl group (cycloalkylamines),
(4) tetraalkylammonium hydroxides, and
(5) polyamine.

(1) Alicyclic Heterocyclic Compounds Containing Nitrogen Atom as Heteroatom

Each heterocyclic ring of the alicyclic heterocyclic compounds containing a nitrogen atom as a heteroatom is generally a 5-, 6-, or 7-membered ring, preferably a 6-membered ring. The number of heteroatoms of each heterocyclic ring is generally 3 or less, preferably 2 or less. The alicyclic heterocyclic compounds may contain a heteroatom other than the nitrogen atom and preferably contains an oxygen atom in addition to the nitrogen atom. The heteroatom(s) may take any position and are preferably not adjacent to each other.

The alicyclic heterocyclic compounds containing a nitrogen atom as a heteroatom generally have a molecular weight of 250 or less, preferably 200 or less, more preferably 150 or less, and generally 30 or more, preferably 40 or more, more preferably 50 or more.

Examples of the alicyclic heterocyclic compounds containing a nitrogen atom as a heteroatom include morpholine, N-methylmorpholine, piperidine, piperazine, N,N'-dimethylpiperazine, 1,4-diazabicyclo(2,2,2)octane, N-methylpiperidine, 3-methylpiperidine, quinuclidine, pyrrolidine, N-methylpyrrolidone, and hexamethyleneimine. These may be used alone or in combination. Among these, morpholine, hexamethyleneimine, and piperidine are preferred, and morpholine is particularly preferred.

(2) Alkylamines

Each alkyl group of the alkylamines is generally a linear alkyl group. The number of alkyl groups of the alkylamines is preferably, but is not limited to, 3 per molecule.

Each alkyl group of the alkylamines may have a substituent, such as a hydroxy group.

Each alkyl group of the alkylamines preferably has 4 or less carbon atoms. More preferably, the total number of carbon atoms of the alkyl group(s) is 5 or more and 30 or less per molecule.

The alkylamines generally have a molecular weight of 250 or less, preferably 200 or less, more preferably 150 or less.

Examples of the alkylamines include di-n-propylamine, tri-n-propylamine, tri-isopropylamine, triethylamine, triethanolamine, N,N-diethylethanolamine, N,N-dimethylethanolamine, N-methyldiethanolamine, N-methylethanolamine, di-n-butylamine, neopentylamine, di-n-pentylamine, isopropylamine, t-butylamine, ethylenediamine, di-isopropyl-ethylamine, and N-methyl-n-butylamine. These may be used alone or in combination. Among these, di-n-propylamine, tri-n-propylamine, tri-isopropylamine, triethylamine, di-n-butylamine, isopropylamine, t-butylamine, ethylenediamine, di-isopropyl-ethylamine, and N-methyl-n-butylamine are preferred, and triethylamine is particularly preferred.

(3) Cycloalkylamines

The number of carbon atoms of each alkyl group of cycloalkylamines is preferably 4 or more and 10 or less. Among others, cyclohexylamine is preferred. The cycloalkylamines may be used alone or in combination.

(4) Tetraalkylammonium Hydroxides

The tetraalkylammonium hydroxides preferably have four alkyl groups having 4 or less carbon atoms. The tetraalkylammonium hydroxides may be used alone or in combination.

(5) Polyamine

The polyamine is preferably a polyamine having a general formula $H_2N$-$(C_nH_{2n}NH)_x$-H (wherein n denotes an integer in the range of 2 to 6, and x denotes an integer in the range of 2 to 10).
In the general formula described above, n preferably denotes an integer in the range of 2 to 5, more preferably 2 to 4, still more preferably 2 or 3, particularly preferably 2. x preferably denotes an integer in the range of 2 to 6, more preferably 2 to 5, still more preferably 3 or 4, particularly preferably 4.
Such a polyamine may be inexpensive ethylenediamine, diethylenetriamine, triethylenetetramine, or tetraethylenepentamine, preferably triethylenetetramine, particularly preferably tetraethylenepentamine. These polyamines may be used alone or in combination. A branched polyamine may also be used.
When two or more templates are used in combination thereof, the combination is not limitative, but is preferably a combination of at least one of the blow (1)-(4) and at least one of (5), more preferably at least one of (5) and two or more of (1)-(4), still more preferably at least one of (5) and at least one of (1) and at least one of (2). A specific example of the combination of two or more of tetraethylenpentamine, morpholine, triethylamine, and cyclohexylamine, particularly the combination of morpholine, trimethylamine and tetraethylenpentamine are preferably used in combination.
Although the combination of (5) polyamine and either template of (1)-(4) as described above may not be used in the present invention, a silicoaluminophosphate zeolite having higher high-temperature water-vapor durability or resistance can be produced by using the combination of the templates.
When polyamine is contained in addition to the source material of copper in the aqueous gel, the copper in the aqueous gel interacts strongly with the polyamine to become stable, and the copper hardly reacts with the elements of the zeolite framework. As a result, copper hardly migrates into the framework of the zeolite (that is, elements of the zeolite framework are hardly replaced by copper), and the copper tends to be dispersed to outside of zeolite framework such as pores of zeolite and held therein. Accordingly, it is considered that copper-supported silicoaminophosphate having high catalyst performance, high adsorption performance, high hydrothermal durability is synthesized.
The mixing ratio of the groups of the templates is selected depending on conditions. In the case of using two types of templates in combination, the molar ratio of the mixed two-type templates is usually 1:20 to 20:1, preferably 1:10 to 10:1, and more preferably 1:5 to 5:1.
In the case of using polyamine and other types of templates in combination, the mixing ratio is usually 1:20 to 20:1, preferably 1:10 to 10:1, and more preferably 1:5 to 5:1. The other templates are preferably two or more types. In the case of using two types of templates, the mixing ratio is 1:20 to 20:1, preferably 1:10 to 10:1, and more preferably 1:5 to 5:1.

<Composition of Aqueous Gel>

The composition of the aqueous gel used in the present invention preferably has the molar ratios of the silicon atom source material, the aluminum atom source material, the phosphorus atom source material, and the copper atom source material on an oxide basis (in terms of oxide) as described below.
The $SiO_2/Al_2O_3$ ratio is generally more than 0, preferably 0.2 or more, preferably 0.8 or less, more preferably 0.6 or less, still more preferably 0.4 or less, particularly preferably 0.3 or less.
The $P_2O_5/Al_2O_3$ ratios is generally 0.6 or more, preferably 0.7 or more, more preferably 0.8 or more, and generally 1.3 or less, preferably 1.2 or less, more preferably 1.1 or less.
The $CuO/Al_2O_3$ ratio is generally 0.01 or more, preferably 0.03 or more, more preferably 0.05 or more, and generally 1 or less, preferably 0.8 or less, more preferably 0.4 or less, still more preferably 0.3 or less.
When the $SiO_2/Al_2O_3$ ratio is lower than the lower limit or higher than the upper limit, this results in a low degree of crystallinity or insufficient high-temperature water-vapor durability.

When the $P_2O_5/Al_2O_3$ ratio is lower than the lower limit or higher than the upper limit, this results in a low degree of crystallinity or insufficient hydrothermal durability. When the $CuO/Al_2O_3$ ratio is lower than the lower limit, this results in insufficient loading of copper on the zeolite. When the $CuO/Al_2O_3$ ratio is higher than the upper limit, this also results in a low degree of crystallinity or insufficient hydrothermal durability.

The composition of the copper-supported zeolite produced by hydrothermal synthesis correlates with the composition of the aqueous gel. Thus, in order to produce a copper-supported zeolite having a desired composition, the composition of the aqueous gel is appropriately determined in the ranges described above.

In the case of using a polyamine as a template in the presence of another template, the polyamine content of the aqueous gel should be sufficient to stabilize the copper atom source material. In the absence of another template, since the polyamine also acts as another template, the polyamine content of the aqueous gel should be sufficient so that the polyamine functions as a template.

More specifically, the aqueous gel preferably has the following polyamine content.

<In the Presence of another Template>

In the presence of another template, the total content of the polyamine and the other template of the aqueous gel is such that the molar ratio of the total of the polyamine and the other template to the aluminum atom source material on an oxide ($Al_2O_3$) basis in the aqueous gel is generally 0.2 or more, preferably 0.5 or more, more preferably 1 or more, and generally 4 or less, preferably 3 or less, more preferably 2.5 or less.

When the total content of the polyamine and the other template is lower than the lower limit, this results in a low degree of crystallinity or insufficient hydrothermal durability. When the total content of the polyamine and the template is higher than the upper limit, this results in an insufficient yield of the zeolite.

The polyamine is preferably used such that the molar ratio of the polyamine to the copper atom source material on an oxide (CuO) basis is generally 0.1 or more, preferably 0.5 or more, more preferably 0.8 or more, and generally 10 or less, preferably 5 or less, more preferably 4 or less.

When the polyamine content of the aqueous gel is lower than the lower limit, the advantages of the present invention using the polyamine are insufficient. When the polyamine content of the aqueous gel is higher than the upper limit, this results in an insufficient yield of the copper-supported zeolite.

<In the Absence of other Template>

In the absence of another template, because of the same reason as described above, the polyamine content of the aqueous gel is preferably such that the molar ratio of the polyamine to the aluminum atom source material on an oxide ($Al_2O_3$) basis in the aqueous gel is generally 0.2 or more, preferably 0.5 or more, more preferably 1 or more, and generally 4 or less, preferably 3 or less, more preferably 2.5 or less, and such that the molar ratio of the polyamine to the copper atom source material on an oxide (CuO) basis is generally 1 or more, preferably 5 or more, more preferably 10 or more, and generally 50 or less, preferably 30 or less, more preferably 20 or less.

One or more templates selected from each of the two or more groups may be mixed in any order. The templates may be mixed with each other before mixed with other material(s), or each of the templates may be mixed with other material(s).

In terms of ease with which the zeolite can be synthesized and productivity, the water content of the aqueous gel is such that the molar ratio of water to the aluminum atom source material on an oxide ($Al_2O_3$) basis is generally 3 or more, preferably 5 or more, more preferably 10 or more, and generally 200 or less, preferably 150 or less, more preferably 120 or less.

The pH of the aqueous gel is generally 5 or more, preferably 6 or more, more preferably 6.5 or more, and generally 11 or less, preferably 10 or less, more preferably 9 or less.

If desired, the aqueous gel may contain another component. Such a component may be an alkali metal or alkaline-earth metal hydroxide or salt or a hydrophilic organic solvent, such as an alcohol. The amount of such a component in the aqueous gel is such that the molar ratio of the alkali metal or alkaline-earth metal hydroxide or salt to the aluminum atom source material on an oxide ($Al_2O_3$) basis is generally 0.2 or less, preferably 0.1 or less. The molar ratio of the hydrophilic organic solvent, such as an alcohol, to water in the aqueous gel is generally 0.5 or less, preferably 0.3 or less.

[Hydrothermal Synthesis]

Hydrothermal synthesis is performed by charging the aqueous gel thus prepared in a pressure vessel and maintaining a predetermined temperature while the aqueous gel is stirred or left still under autogenous pressure or under a gas pressure at which crystallization is not inhibited.

The predetermined temperature (reaction temperature) in the hydrothermal synthesis is generally 100°C or more, preferably 120°C or more, more preferably 150°C or more, and generally 300°C or less, preferably 250°C or less, more preferably 220°C or less. The reaction time is generally 2 hours or more, preferably 3 hours or more, more preferably 5 hours or more, and generally 30 days or less, preferably 10 days or less, more preferably 4 days or less. The reaction temperature may be constant during the reaction or may be stepwise or continuously changed.

[Copper-supported Zeolite Containing Template etc.]

After the hydrothermal synthesis, the resulting product zeolite (hereinafter referred to as "copper-supported zeolite containing template etc.") containing the polyamine and the optional other template ("the polyamine" or "the polyamine and the other template" are hereinafter referred to as "template etc.") is separated from the hydrothermal synthetic reaction solution. The zeolite containing the template etc. may be separated from the hydrothermal synthetic reaction solution by any method. In general, the zeolite may be separated by filtration, decantation or direct drying. Drying is conducted preferably at a temperature from a room temperature to 150°C.

The zeolite containing the template etc. separated from the hydrothermal synthetic reaction solution may be washed by water. The zeolite containing the template etc. may be washed by water preferably to an extent that when the washed zeolite containing the template etc. is immersed in water six times in weight of the zeolite, the water has a conductivity (hereinafter referred to as "immersion water conductivity" sometimes) of 0.1 mS/cm or more, preferably 0.5 mS/cm or more, still more preferably 1 mS/cm or more. When the zeolite containing the template etc. is washed such that the immersion water conductivity is less than the lower limit of the above range, the copper-supported zeolite may be deteriorated in water resistance.

After washed by water, the zeolite containing the template etc. may be separated from water by filtration and then dried. Instead thereof, the zeolite containing the template etc. dispersed in water may be dried directly by spray-drying etc. to become powdery zeolite containing the template etc.. Drying is conducted preferably at a temperature from a room temperature to 150°C.

The zeolite containing the template etc. separated from the hydrothermal synthetic reaction solution may be subjected to the steam treatment without washing, or may be subjected to removing the template and then to steam treatment without washing.

[Removal of Template etc.]

The zeolite containing the template is then subjected to steam treating. Prior to the steam treating, the template etc. may be removed from the powdery zeolite containing the template etc.. The template etc. may be removed by any method. In general, organic substances (template etc.) contained in the zeolite may be removed by calcinating in air, an inert gas atmosphere containing oxygen or in an inert gas atmosphere at a temperature in the range of 300°C to 1000°C or by extraction using an extracting solvent, such as aqueous ethanol or HCl-containing ether.

Preferably, the template etc. is removed by calcinating in terms of productivity. The calcination is conducted under a flow of a gas containing essentially no steam (namely having steam content of 0.5 volume % or less) at a temperature preferably in the range of 400°C to 900°C, more preferably 450°C to 850°C, still more preferably 500°C to 800°C for preferably 0.1 to 72 hours, more preferably 0.3 to 60 hours, still more preferably 0.5 to 48 hours.

[Steam Treatment]

The copper-supported zeolite, which is prepared by removing the template and the like from the dried zeolite containing the template and the like as needed, is subjected to a steam treatment.

In the preparation of the copper-supported zeolite of the present invention, the steam treatment is performed preferably at 600°C to 1000°C and more preferably at 700°C to 900°C under the presence of steam while the copper-supported zeolite is stirred.

The term "stir" used herein refers to not only an operation that can be described as "stirring" or "mixing" but also to operations that can be described as "causing to flow", "shaking", or "inverting" in a broad sense. That is, the term "stir" used herein refers to all operations by which the surface of an aggregate of particles of the copper-supported zeolite can be renewed in the steam treatment.

Stirring may be performed by any method that enables the copper-supported zeolite, which is to be subjected to the steam treatment, to be stirred uniformly. Thus, a method for stirring the copper-supported zeolite is not limited. Specifically, the steam treatment is performed by heating the copper-supported zeolite at the above temperature in an atmosphere having a steam content of preferably 1% by volume or more, more preferably 3% to 40% by volume, and further preferably 5% to 30% by volume inside a steam treatment tank (steam treatment container) containing the copper-supported zeolite while the copper-supported zeolite is stirred with one or more selected from a stirrer having an axis, a stirrer that does not have an axis, a stirrer connected to a tank, and a fluid. The steam treatment is preferably performed for 0.1 hours or more and 72 hours or less, is more preferably for 0.3 to 24 hours, is further preferably for 0.5 to 12 hours, and is most preferably for 1 to 6 hours.

If the temperature at which the steam treatment is performed, the time during which the steam treatment is performed, or the steam content in the atmosphere is less than the above lower limit, the enhancement of low temperature-steam resistance due to the steam treatment may fail to be achieved to a sufficient degree. If the steam treatment temperature is higher than the above upper limit, the zeolite structure may become degraded or destroyed. Setting the steam treatment time to be larger than the above upper limit does not contribute to further enhancement of the low temperature-steam resistance of the zeolite and is not preferable in terms of productivity. If the steam content is higher than the above upper limit, the zeolite structure may become degraded or destroyed.

For supplying steam (a steam-containing gas or the like) in the steam treatment, a flow-type method or a batch-type method may be employed. A steam-containing air is commonly used as steam. Alternatively, an inert gas in which steam is entrained may also be used.

The steam treatment tank (steam treatment container), into which the copper-supported zeolite is to be charged in the steam treatment, preferably has a volume appropriate to the amount of the copper-supported zeolite such that the copper-supported zeolite can be stirred to a sufficient degree with the above stirring means and the copper-supported zeolite contained in the tank is uniformly treated with steam. Specifically, the steam treatment tank preferably has an effective volume that is 1.2 to 20 times and particularly 1.5 to 10 times the volume of the copper-supported zeolite (the apparent volume of the copper-supported zeolite which is measured after the surface of the copper-supported zeolite charged in a container has been flattened without performing stamping or the like) that is to be charged into the steam treatment tank. If the effective volume of the steam treatment tank is smaller than the above lower limit, the copper-supported zeolite may fail to be stirred to a sufficient degree in the steam treatment tank such that the steam treatment is performed uniformly. Setting the effective volume of the steam treatment tank to be larger than the above upper limit does not further enhance the advantageous effect of the steam treatment and disadvantageously increases the size of the steam treatment tank.

Charging the copper-supported zeolite into a steam treatment tank having an appropriate volume makes it possible to cause the copper-supported zeolite to flow and be stirred (i.e., stirring using a fluid) by passing steam through the copper-supported zeolite at an appropriate velocity. Performing rotation or vibration by using the steam treatment tank as a stirrer makes it possible to stir the copper-supported zeolite without using a stirring rod or a stirring impeller.

The steam treatment may be performed in a batch-processing manner by charging the copper-supported zeolite into the stirring tank or in a continuous-processing manner by using a continuous rotary kiln or the like.

A continuous or batch rotary kiln is preferably used in consideration of the uniformity and mass productivity of the treatment of the powder. In particular, a continuous rotary kiln is preferable.

For heating the continuous rotary kiln, electrothermal heating, gas-combustion heating, and the like may be employed. Electrothermal heating, by which the temperature can be increased more uniformly, is preferable.

Rotating the rotary kiln causes the copper-supported zeolite to be stirred and enables the copper-supported zeolite to be uniformly treated with steam. The number of revolutions of the rotary kiln is preferably 0.1 to 10 rpm.

A lifter (scooping plate) may be disposed in the kiln or a rotatable object may be charged into the kiln in order to increase the stirring of the kiln.

The steam may be introduced into the kiln on a side of the kiln on which the copper-supported zeolite is charged into the kiln or on which the copper-supported zeolite is discharged from the kiln. Since the temperature distribution inside the rotary kiln is usually not uniform, it is preferable to measure the temperature of the zeolite inside the kiln at several positions with a thermocouple disposed in the kiln and consider the highest temperature to be a temperature at which the steam treatment is performed.

[Uses of Copper-supported Zeolite]

Uses of the copper-supported zeolites according to the present invention is not particularly limited. The copper-supported zeolite according to the present invention is suitably used as an exhaust-gas purification catalyst for vehicles or a water vapor adsorbent because of its excellent low temperature-water vapor resistance, and high catalytic activity.

<Exhaust Gas Purification Treatment Catalyst>

When the copper-supported zeolite according to the present invention is used as an exhaust gas purification treatment catalyst, such as an automobile exhaust-gas purification catalyst, the copper-supported zeolite may be directly used in the form of powder or may be mixed with a binder, such as silica, alumina, or clay mineral, and subjected to granulation or forming before use. The copper-supported zeolite according to the present invention may be formed into a predetermined shape, preferably a honeycomb shape, by a coating method or a forming method.

In the case that a formed catalyst containing the copper-supported zeolite according to the present invention is formed by a coating method, in general, the copper-supported zeolite is mixed with an inorganic binder, such as silica or alumina, to prepare a slurry. The slurry is applied to a surface of a formed product made of an inorganic substance, such as cordierite, and is calcinated to yield the formed catalyst. Preferably, the slurry can be applied to a formed product of a honeycomb shape to form a honeycomb catalyst.

In general, a formed catalyst containing the copper-supported zeolite according to the present invention is formed by mixing the copper-supported zeolite with an inorganic binder, such as silica or alumina, or inorganic fiber, such as alumina fiber or glass fiber, shaping the mixture by an extrusion method or a compression method, and calcinating the mixture to yield the formed catalyst. Preferably, the mixture can be formed into a honeycomb shape to yield a honeycomb catalyst.

The catalyst containing the copper-supported zeolite according to the present invention is effective as selectively reductive catalyst of NOx such as an automobile exhaust-gas purification catalyst for removing nitrogen oxides by contact with an exhaust gas containing nitrogen oxides. The exhaust gas may contain components other than nitrogen oxides, such as hydrocarbons, carbon monoxide, carbon dioxide, hydrogen, nitrogen, oxygen, sulfur oxides, and/or water. A known reducing agent, for example, hydrocarbon, or a nitrogen-containing compound, such as ammonia or urea, may be used. The exhaust gas treatment catalyst containing the copper-supported zeolite according to the present invention can remove nitrogen oxides contained in a wide variety of exhaust gases emitted from diesel cars, gasoline cars, and various diesel engines, boilers, and gas turbines for use in stationary power generation, ships, agricultural machinery, construction equipment, two-wheeled vehicles, and aircrafts, for example.

Although the contact conditions for the catalyst containing the copper-supported zeolite according to the present invention and an exhaust gas are not particularly limited, the space velocity of the exhaust gas is generally 100 /h or more, preferably 1000 /h or more, and generally 500000 /h or less, preferably 100000 /h or less, and the temperature is generally 100°C or higher, preferably 150°C or higher, and generally 700°C or lower, preferably 500°C or lower.

<Water Vapor Adsorbent>

The copper-supported zeolite according to the present invention has excellent water vapor adsorption and desorption characteristics.

The adsorption and desorption characteristics can vary with conditions. In general, the copper-supported zeolite according to the present invention can adsorb water vapor from low temperature to high temperature at which it is commonly difficult to adsorb water vapor and from high humidity to low humidity at which it is commonly difficult to adsorb water vapor, and can desorb water vapor at a relatively low temperature of 100°C or less.

Such a water vapor adsorbent may be used in adsorption heat pumps, heat exchangers, and desiccant air conditioners.

The copper-supported zeolite according to the present invention has excellent performance particularly as a water vapor adsorbent. The copper-supported zeolite according to the present invention used as a water vapor adsorbent may be used in combination with a metal oxide, such as silica, alumina, or titania, a binder component, such as clay, or a thermal-conductive component. When the copper-supported zeolite according to the present invention is used in combination with such a component, the copper-supported zeolite content of a water vapor adsorbent is preferably 60% by weight or more, more preferably 70% by weight or more, still more preferably 80% by weight or more.

EXAMPLES

The present invention is described specifically with reference to Examples below. The present invention is not limited by Examples below as long as the summary of the present invention is not impaired.

Copper-supported zeolites prepared in Examples and Comparative Examples described below were each analyzed and evaluated in terms of performance by the following methods.

[Analysis of crystal structure of zeolite by powder XRD]

<Preparation of samples>

About 100 mg of each of copper-supported zeolite samples was manually ground with an agate mortar, and sample holders having the same shape were filled with the copper-supported zeolite samples so that the amounts of the samples were uniform.

<Specifications of apparatus and measurement conditions>

Specifications of a powder XRD measurement apparatus and measurement conditions are as follows.

[Table 1]

Table 1 〈Specifications of powder XRD measurement apparatus〉

| Name of apparatus | | X'Pert Pro MPD available from PANalytical B.V., The Netherlands |
|---|---|---|
| Optical system | | Bragg−Brentano optical system |
| Optical system specifications | Incident side | Sealed X−ray tube (CuK$\alpha$) |
| | | Soller Slit(0.04rad) |
| | | Divergence Slit(Variable Slit) |
| | | Knife edge |
| | Sample stage | Sample rotation stage (Spinner) |
| | Light−receiving side | Semiconductor array detector (X'Celerator) |
| | | Ni−filter |
| | | Soller Slit(0.04rad) |
| | Goniometer radius | 243mm |

[Table 2]

Table 2 <Measurement conditions>

| X-ray output | 40kV |
|---|---|
| (CuK $\alpha$) | 30mA |
| Scan axis | $\theta$ /2 $\theta$ |
| Scan range (2 $\theta$) | 3.0-50.0° |
| Measurement mode | Continuous |
| Scan size | 0.018° |
| Counting time | 29.8sec |
| Automatic variable slit | 10mm |
| (Automatic-D S) | (Irradiation width) |

[Measurement of amount of copper supported and contents of atoms by XRF]

For each of prepared copper-supported zeolite samples, the amount of copper supported and the content of atoms in the copper-supported zeolite framework structure were determined by X-ray fluorescence analysis (XRF, under the following conditions).

Measurement apparatus: EDX-700 (Shimadzu Corporation)

X-ray source: Rh target, 15 kV, 100 μA

[Measurement of UV-Vis-NIR absorption intensity ratio]

For each of the copper-supported zeolite samples prepared by the methods described below, absorption intensities at a wavenumber of 22,000 cm$^{-1}$ and a wavenumber of 12,500 cm$^{-1}$ were measured by ultraviolet-visible-near infrared spectroscopy (UV-Vis-NIR, under the following conditions) to determine a ratio Intensity (22,000 cm$^{-1}$)/Intensity (12,500 cm$^{-1}$).

<Preparation of samples>

Sample powders each of which was manually ground with an agate mortar were spread in glass petri dishes and stored for 12 hours in a desiccator in which a relative humidity was controlled to 50% by using a saturated aqueous solution of magnesium nitrate to allow moisture to be absorbed. Sample holders having the same shape were filled with the sample powders that absorbed moisture so that the amounts of the samples were uniform.

<Measurement conditions>

Measurement apparatus: UV-3100s (Shimadzu Corporation)
Light source: Xe lamp
Wavenumber range: 8,000 to 25,000 cm$^{-1}$
Slit width: 20 nm
Measurement method: reflection method

[Measurement of specific surface area]

The specific surface areas of the prepared copper-supported zeolite samples were determined by a BET one-point method with a fully automatic powder specific surface area measurement apparatus (AMS1000) available from Okura Riken Co., Ltd.

[Evaluation of catalytic activity]

The prepared copper-supported zeolite samples were each press-formed, pulverized, and sieved to be formed into particles having a size of 0.6 to 1 mm. Subsequently, 1.0 mL of the particles of each of the copper-supported zeolite samples were heated in air at 550°C for 30 minutes, and then charged into a normal-pressure fixed-bed flow-type reaction tube. While a gas having the composition shown in Table 3 below was allowed to pass through the resulting copper-supported zeolite layer at a space velocity SV of 200,000/h, the copper-supported zeolite layer was heated. After the NO concentration at the outlet of the reaction tube became constant at 200°C, the purification performance (nitrogen oxide removal activity) of each of the copper-supported zeolite samples was evaluated on the basis of the value calculated by the formula below.

```
NO purification rate (%)

= {(inlet NO concentration) - (outlet NO

concentration)}/(inlet NO concentration) × 100
```

[Table 3]

Table 3

| Gas component | Concentration |
|---|---|
| NO | 350 ppm |

(continued)

| Gas component | Concentration |
|---|---|
| $NH_3$ | 385 ppm |
| $O_2$ | 15 % by volume |
| $H_2O$ | 5 % by volume |
| $N_2$ | Balance other than the above components |

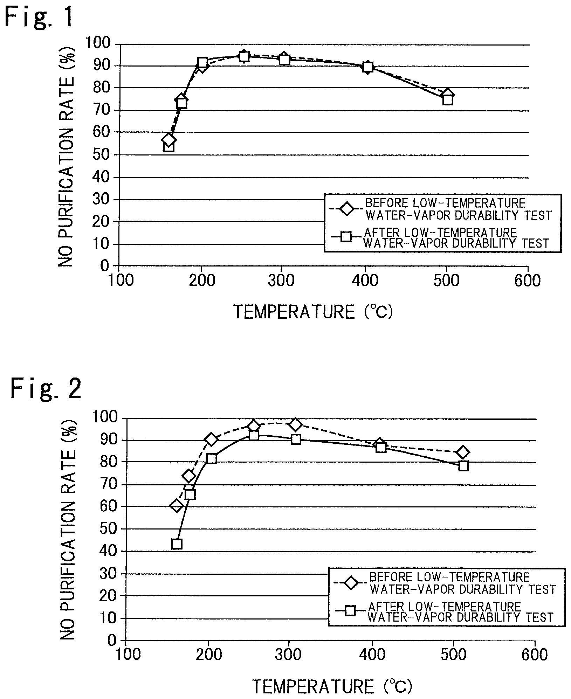

With regard to the copper-supported zeolites of Example 3 and Comparative Example 1, the test temperature was changed to 160°C, 175°C, 200°C, 250°C, 300°C, 400°C, and 500°C, and the purification performance (nitrogen oxide removal activity) at different temperatures was evaluated (Figs. 1 and 2).

[Evaluation of catalytic activity after low-temperature water-vapor durability test]

<Low-temperature water-vapor durability test>

A low-temperature water-vapor durability test was conducted with reference to a method for testing low-temperature water-vapor durability of a silicoaluminophosphate zeolite, the method being described in Renewable Energy 36 (2011) 3043-3049. Specifically, the low-temperature water-vapor durability test was conducted by a method described below.

The prepared copper-supported zeolite samples were each press-formed, pulverized, and sieved to be formed into particles having a size of 0.6 to 1 mm. Subsequently, 1.1 mL of the particles of each of the copper-supported zeolite samples were charged into a glass cell. While a gas having the composition shown in Table 4 below was allowed to pass through the resulting copper-supported zeolite layer at a space velocity SV of 100,000/h, the temperature of a chamber in which the reaction tube was placed was switched so as to be maintained at 70°C for 13 minutes and then maintained at 140°C for 13 minutes. The heating at 70°C and 140°C was defined as one cycle, and this heating was conducted a total of 40 cycles.

[Table 4]

Table 4

| Gas component | Concentration |
|---|---|
| $H_2O$ | 10 % by volume |
| $N_2$ | Balance other than the above components |

<Evaluation of catalytic activity>

The catalytic activity at 200°C was evaluated as in the above by using 1.0 mL of each of the copper-supported zeolite samples after the low-temperature water-vapor durability test.

With regard to the copper-supported zeolites of Example 3 and Comparative Example 1, the test temperature was changed to 160°C, 175°C, 200°C, 250°C, 300°C, 400°C, and 500°C, and the purification performance (nitrogen oxide removal activity) at different temperatures was evaluated.

[Example 1]

In 108 g of phosphoric acid having a concentration of 75% by weight, 3.3 g of copper oxide (available from Kanto Chemical Co., Inc.) was dissolved, and 216.9 g of water was then added thereto. Next, 61.7 g of pseudo-boehmite (containing 25% by weight of water, available from CONDEA Chemie GmbH) was slowly added to the resulting mixture, and the mixture was stirred for 1 hour. Furthermore, 6.8 g of fumed silica (AEROSIL 200, available from Nippon Aerosil Co., Ltd.) and 149.9 g of water were added thereto, and the resulting mixture was stirred for 1 hour. Subsequently, 39.6 g of morpholine and 55.1 g of triethylamine were slowly added thereto, and the resulting mixture was stirred for 1 hour. Lastly, 7.6 g of tetraethylenepentamine (available from Kishida Chemical Co., Ltd.) was added thereto, and the resulting mixture was then stirred for 1 hour. Thus, an aqueous gel having the composition described below was prepared.

<Composition of aqueous gel (molar ratio)>

$SiO_2$: 0.25
$Al_2O_3$: 1
$P_2O_5$: 0.91
CuO: 0.088
Tetraethylenepentamine: 0.088
Morpholine: 1
Triethylamine: 1.2
Water: 50

The resulting aqueous gel was charged into a 1,000 mL stainless steel autoclave including a fluororesin inner cylinder and allowed to react at 190°C for 24 hours under stirring (hydrothermal synthesis). After the hydrothermal synthesis, cooling was performed, a supernatant was removed by decantation to collect a precipitate. The precipitate was washed with water three times. Subsequently, the precipitate was separated by filtration and dried at 100°C.

The resulting copper-supported zeolite powder was analyzed by powder XRD. According to the results, an XRD pattern having peaks and relative intensities at the positions of the lattice spacing shown in Table 5 below was observed on a display in terms of lattice spacing. Thus, it was confirmed that the zeolite was a CHA-type zeolite.

[Table 5]

Table 5 <Lattice spacing and relative intensity of Example 1>

| Lattice spacing d(Å) | Relative intensity |
|---|---|
| 9.43 | 56 |
| 6.39 | 15 |
| 5.57 | 48 |
| 5.02 | 18 |
| 4.34 | 100 |
| 4.06 | 5 |
| 3.88 | 6 |
| 3.58 | 30 |
| 3.46 | 17 |
| 2.93 | 31 |

The resulting copper-supported zeolite powder was calcined at 550°C for 6 hours in a flow of air (water vapor content: 0.5% by volume or less) to remove the template. Thus, a copper-supported zeolite having an amount of copper supported of 3.0% by weight was prepared.

The resulting copper-supported zeolite was treated with steam in an air atmosphere having a water vapor content of 10% by volume at 800°C (steam treatment temperature) for 2 hours under stirring with a continuous rotary kiln (the effective volume of the rotary kiln was three times the apparent volume of the copper-supported zeolite). Thus, a copper-supported zeolite A-1 was prepared. The details of the steam treatment conditions are as follows.

<Conditions for steam treatment>

A continuous rotary kiln made of SUS 316 and having a diameter of 6 cm and a length of 30 cm was used.

The number of revolutions of rotary kiln: 1 rpm
Feed rate of copper-supported zeolite: 1 g/min
Supply flow rate of steam having a water vapor content of 10% by volume: 6 L/min
Steam treatment temperature: Temperatures of the copper-supported zeolite in the rotary kiln were measured with thermocouples at several positions, and the highest temperature thereof was set to a steam treatment temperature.

The copper-supported zeolite A-1 was subjected to the various evaluations described above. Table 6 shows the results.

[Example 2]

A copper-supported zeolite A-2 was prepared as in Example 1 except that the treatment time in the steam treatment was changed to 3 hours. The powder XRD results of a powder of the copper-supported zeolite before the calcination showed that the zeolite was a CHA-type zeolite.
The copper-supported zeolite A-2 was subjected to the various evaluations described above. Table 6 shows the results.

[Example 3]

A copper-supported zeolite A-3 was prepared as in Example 1 except that the treatment temperature in the steam treatment was changed to 880°C. The powder XRD results of a powder of the copper-supported zeolite before the calcination showed that the zeolite was a CHA-type zeolite.
The copper-supported zeolite A-3 was subjected to the various evaluations described above. Table 6 shows the results.
Fig. 1 shows the relationship between the temperature of the catalytic activity test and the NO purification rate.

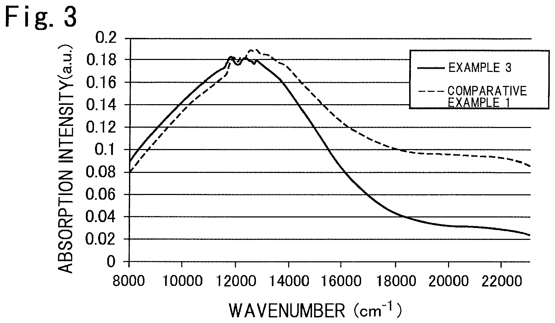

Fig. 3 shows a chart showing the absorption intensity of the copper-supported zeolite A-3 in a wavenumber range of 8,000 to 23,000 $cm^{-1}$.

[Example 4]

In 108 g of phosphoric acid having a concentration of 75% by weight, 3.4 g of copper oxide (available from Kanto Chemical Co., Inc.) was dissolved, and 216.9 g of water was then added thereto. Next, 61.7 g of pseudo-boehmite (containing 25% by weight of water, available from CONDEA Chemie GmbH) was slowly added to the resulting mixture, and the mixture was stirred for 1 hour. Furthermore, 6.8 g of fumed silica (AEROSIL 200, available from Nippon Aerosil Co., Ltd.) and 149.9 g of water were added thereto, and the resulting mixture was stirred for 1 hour. Subsequently, 39.6 g of morpholine and 55.1 g of triethylamine were slowly added thereto, and the resulting mixture was stirred for 1 hour. Lastly, 7.8 g of tetraethylenepentamine (available from Kishida Chemical Co., Ltd.) was added thereto, and the resulting mixture was then stirred for 1 hour. Thus, an aqueous gel having the composition described below was prepared.

<Composition of aqueous gel (molar ratio)>

$SiO_2$: 0.25
$Al_2O_3$: 1
$P_2O_5$: 0.91
CuO: 0.091
Tetraethylenepentamine: 0.091
Morpholine: 1
Triethylamine: 1.2
Water: 50

The resulting aqueous gel was charged into a stainless steel autoclave including a fluororesin inner cylinder as in Example 1, and hydrothermal synthesis was conducted under the same conditions. The resulting precipitate was similarly washed, dried, and calcined to prepare a copper-supported zeolite having an amount of copper supported of 3.5% by weight. The powder XRD results of a powder of the copper-supported zeolite showed that the zeolite was a CHA-type zeolite.
The resulting copper-supported zeolite was subjected to a steam treatment under stirring as in Example 1 to prepare a copper-supported zeolite A-4.

The copper-supported zeolite A-4 was subjected to the various evaluations described above. Table 6 shows the results.

[Example 5]

In 108 g of phosphoric acid having a concentration of 75% by weight, 2.7 g of copper oxide (available from Kanto Chemical Co., Inc.) was dissolved, and 216.9 g of water was then added thereto. Next, 61.7 g of pseudo-boehmite (containing 25% by weight of water, available from CONDEA Chemie GmbH) was slowly added to the resulting mixture, and the mixture was stirred for 1 hour. Furthermore, 6.8 g of fumed silica (AEROSIL 200, available from Nippon Aerosil Co., Ltd.) and 149.9 g of water were added thereto, and the resulting mixture was stirred for 1 hour. Subsequently, 39.6 g of morpholine and 55.1 g of triethylamine were slowly added thereto, and the resulting mixture was stirred for 1 hour. Lastly, 7.2 g of tetraethylenepentamine (available from Kishida Chemical Co., Ltd.) was added thereto, and the resulting mixture was then stirred for 1 hour. Thus, an aqueous gel having the composition described below was prepared.

<Composition of aqueous gel (molar ratio)>

$SiO_2$: 0.25
$Al_2O_3$: 1
$P_2O_5$: 0.91
CuO: 0.073
Tetraethylenepentamine: 0.073
Morpholine: 1
Triethylamine: 1.2
Water: 50

The resulting aqueous gel was charged into a stainless steel autoclave including a fluororesin inner cylinder as in Example 1, and hydrothermal synthesis was conducted under the same conditions. The resulting precipitate was similarly washed, dried, and calcined to prepare a copper-supported zeolite having an amount of copper supported of 2.5% by weight. The powder XRD results of a powder of the copper-supported zeolite showed that the zeolite was a CHA-type zeolite.

The resulting copper-supported zeolite was subjected to a steam treatment under stirring as in Example 1 to prepare a copper-supported zeolite A-5.

The copper-supported zeolite A-5 was subjected to the various evaluations described above. Table 6 shows the results.

[Example 6]

In 124 g of phosphoric acid having a concentration of 75% by weight, 3.8 g of copper oxide (available from Kanto Chemical Co., Inc.) was dissolved, and 249.0 g of water was then added thereto. Next, 70.9 g of pseudo-boehmite (containing 25% by weight of water, available from CONDEA Chemie GmbH) was slowly added to the resulting mixture, and the mixture was stirred for 1 hour. Furthermore, 7.8 g of fumed silica (AEROSIL 200, available from Nippon Aerosil Co., Ltd.) and 78.2 g of water were added thereto, and the resulting mixture was stirred for 1 hour. Subsequently, 45.4 g of morpholine and 63.3 g of triethylamine were slowly added thereto, and the resulting mixture was stirred for 1 hour. Lastly, 8.7 g of tetraethylenepentamine (available from Kishida Chemical Co., Ltd.) was added thereto, and the resulting mixture was then stirred for 1 hour. Thus, an aqueous gel having the composition described below was prepared.

<Composition of aqueous gel (molar ratio)>

$SiO_2$: 0.25
$Al_2O_3$: 1
$P_2O_5$: 0.91
CuO: 0.088
Tetraethylenepentamine: 0.088

Morpholine: 1
Triethylamine: 1.2
Water: 40

The resulting aqueous gel was charged into a stainless steel autoclave including a fluororesin inner cylinder as in Example 1, and hydrothermal synthesis was conducted under the same conditions. The resulting precipitate was similarly washed, dried, and calcined to prepare a copper-supported zeolite having an amount of copper supported of 3.0% by weight. The powder XRD results of a powder of the copper-supported zeolite showed that the zeolite was a CHA-type zeolite.

The resulting copper-supported zeolite was charged into a quartz glass fixed bed and subjected to a steam treatment in an air atmosphere having a water vapor content of 10% by volume at 800°C for 3 hours. Thus, a copper-supported zeolite A-6 was prepared.

The copper-supported zeolite A-6 was subjected to the various evaluations described above. Table 6 shows the results.

[Comparative Example 1]

A copper-supported zeolite X-1 was prepared as in Example 1 except that the steam treatment was not performed. The copper-supported zeolite X-1 was subjected to the various evaluations described above. Table 6 shows the results.

Fig. 2 shows the relationship between the temperature of the catalytic activity test and the NO purification rate.

Fig. 3 shows a chart showing the absorption intensity of the copper-supported zeolite X-1 in a wavenumber range of 8, 000 to 23, 000 cm$^{-1}$.

[Comparative Example 2]

In 108 g of phosphoric acid having a concentration of 75% by weight, 4.7 g of copper oxide (available from Kanto Chemical Co., Inc.) was dissolved, and 216.9 g of water was then added thereto. Next, 61.7 g of pseudo-boehmite (containing 25% by weight of water, available from CONDEA Chemie GmbH) was slowly added to the resulting mixture, and the mixture was stirred for 1 hour. Furthermore, 6.8 g of fumed silica (AEROSIL 200, available from Nippon Aerosil Co., Ltd.) and 149.9 g of water were added thereto, and the resulting mixture was stirred for 1 hour. Subsequently, 39.6 g of morpholine and 55.1 g of triethylamine were slowly added thereto, and the resulting mixture was stirred for 1 hour. Lastly, 10.8 g of tetraethylenepentamine (available from Kishida Chemical Co., Ltd.) was added thereto, and the resulting mixture was then stirred for 1 hour. Thus, an aqueous gel having the composition described below was prepared.

<Composition of aqueous gel (molar ratio)>

$SiO_2$: 0.25
$Al_2O_3$: 1
$P_2O_5$: 0.91
CuO: 0.125
Tetraethylenepentamine: 0.125
Morpholine: 1
Triethylamine: 1.1
Water: 50

The resulting aqueous gel was charged into a stainless steel autoclave including a fluororesin inner cylinder as in Example 1, and hydrothermal synthesis was conducted under the same conditions. The resulting precipitate was similarly washed, dried, and calcined to prepare a copper-supported zeolite having an amount of copper supported of 4.0% by weight. The powder XRD results of a powder of the copper-supported zeolite showed that the zeolite was a CHA-type zeolite.

The resulting copper-supported zeolite was subjected to a steam treatment under stirring as in Example 1 to prepare a copper-supported zeolite X-2.

The copper-supported zeolite X-2 was subjected to the various evaluations described above. Table 6 shows the results.

[Comparative Example 3]

In 90.9 g of phosphoric acid having a concentration of 75% by weight, 3.8 g of copper oxide (available from Kanto Chemical Co., Inc.) was dissolved, and 221.5 g of water was then added thereto. Next, 63.0 g of pseudo-boehmite (containing 25% by weight of water, available from CONDEA Chemie GmbH) was slowly added to the resulting mixture, and the mixture was stirred for 1 hour. Furthermore, 16.7 g of fumed silica (AEROSIL 200, available from Nippon Aerosil Co., Ltd.) and 158.0 g of water were added thereto, and the resulting mixture was stirred for 1 hour. Subsequently, 40.4 g of morpholine and 46.9 g of triethylamine were slowly added thereto, and the resulting mixture was stirred for 1 hour. Lastly, 8.8 g of tetraethylenepentamine (available from Kishida Chemical Co., Ltd.) was added thereto, and the resulting mixture was then stirred for 1 hour. Thus, an aqueous gel having the composition described below was prepared.

<Composition of aqueous gel (molar ratio)>

$SiO_2$: 0.6
$Al_2O_3$: 1
$P_2O_5$: 0.75
CuO: 0.1
Tetraethylenepentamine: 0.1
Morpholine: 1
Triethylamine: 1
Water: 50

The resulting aqueous gel was charged into a stainless steel autoclave including a fluororesin inner cylinder as in Example 1, and hydrothermal synthesis was conducted under the same conditions. The resulting precipitate was similarly washed, dried, and calcined to prepare a copper-supported zeolite X-3 having an amount of copper supported of 3.0% by weight. The powder XRD results of a powder of the copper-supported zeolite showed that the zeolite was a CHA-type zeolite.

The copper-supported zeolite X-3 was subjected to the various evaluations described above. Table 6 shows the results.

In Table 6, the value of x in the formula (II) is represented as "Si content (molar ratio)". The amount of copper supported (in terms of copper atoms) is represented as "amount of Cu supported (% by weight)".

[Table 6]

Table 6

| | Steam treatment | | | Si content* (molar ratio) | Amount of Cu supported (% by weight) | Absorption intensity ratio (I) | Specific surface area ($m^2$/g) | NO purification rate (%) at 200°C | |
|---|---|---|---|---|---|---|---|---|---|
| | Temperature (°C) | Time (h) | Stirring | | | | | Before low-temperature water-vapor durability test | After low-temperature water-vapor durability test |
| Example 1 | 800 | 2 | Performed | 0.099 | 3.0 | 0.32 | 610 | 89 | 90 |
| Example 2 | 800 | 3 | Performed | 0.099 | 3.0 | 0.17 | 627 | 89 | 91 |
| Example 3 | 880 | 2 | Performed | 0.099 | 3.0 | 0.05 | 610 | 90 | 93 |
| Example 4 | 800 | 2 | Performed | 0.095 | 3.5 | 0.30 | 578 | 92 | 88 |
| Example 5 | 800 | 2 | Performed | 0.096 | 2.5 | 0.14 | 647 | 90 | 91 |
| Example 6 | 800 | 3 | Not performed | 0.082 | 3.0 | 0.22 | 625 | 90 | 88 |
| Comparative Example 1 | Steam treatment was not performed | | | 0.099 | 3.0 | 0.50 | 618 | 90 | 82 |
| Comparative Example 2 | 800 | 2 | Performed | 0.096 | 4.0 | 0.36 | 568 | 89 | 84 |
| Comparative Example 3 | Steam treatment was not performed | | | 0.150 | 3.0 | 0.41 | 634 | 93 | 82 |

*Represents a ratio x of the number of moles of silicon atoms to the total number of moles of silicon atoms, aluminum atoms, and phosphorus atoms contained in zeolite framework structure.

EP 3 318 533 A1

Table 6 shows that the copper-supported zeolites according to the present invention, which were prepared in Examples 1 to 6, have higher low-temperature water-vapor durability than the copper-supported zeolites of Comparative Examples 1 to 3.

Fig. 1 shows that, after the low-temperature water-vapor durability test, the copper-supported zeolite A-3 of Example 3 has high NO purification performance in any temperature region and thus has good low-temperature water-vapor durability.

The copper-supported zeolite X-1 of Comparative Example 1, which was not subjected to a steam treatment, has a high dimer content and thus has poor low-temperature water-vapor durability.

The copper-supported zeolite X-2 of Comparative Example 2, which had a large amount of copper supported, cannot sufficiently convert dimers to divalent copper ions even when the steam treatment was performed, and thus has poor low-temperature water-vapor durability.

The copper-supported zeolite X-3 of Comparative Example 3, which had a high Si content, has a lower absorption intensity ratio (I) than Comparative Example 1, which had a low Si content, showing that the amount of dimer is somewhat decreased. However, the copper-supported zeolite X-3 of Comparative Example 3 is not resistant to water vapor and has poor low-temperature water-vapor durability.

Although the present invention has been described in detail with reference to particular embodiments, it is obvious to a person skilled in the art that various modifications can be made therein without departing from the spirit and scope of the present invention.

The present application is based on Japanese Patent Application No. 2015-133637 filed on July 2, 2015, which is incorporated herein by reference in its entirety.

**Claims**

1. A copper-supported zeolite comprising a zeolite having a framework structure that contains at least silicon atoms, phosphorus atoms, and aluminum atoms, and copper supported on the zeolite, wherein the copper-supported zeolite satisfies (1) to (3) below:

   (1) an amount of copper (in terms of copper atoms) supported on the copper-supported zeolite is 1.5% by weight or more and 3.5% by weight or less,
   (2) the copper-supported zeolite has an UV-Vis-NIR absorption intensity ratio of less than 0.35 as determined by a formula (I) below:

   $$\text{Intensity } (22{,}000 \text{ cm}^{-1})/\text{Intensity } (12{,}500 \text{ cm}^{-1}) \quad \cdots \quad (I),$$

   and
   (3) a silicon atom content of the copper-supported zeolite satisfies a formula (II) below:

   $$0.07 \leq x \leq 0.11 \quad \cdots \quad (II)$$

   where x represents a ratio of the number of moles of the silicon atoms to the total number of moles of the silicon atoms, the aluminum atoms, and the phosphorus atoms contained in the framework structure of the copper-supported zeolite.

2. The copper-supported zeolite according to Claim 1, wherein the UV-Vis-NIR absorption intensity ratio is less than 0.30.

3. The copper-supported zeolite according to Claim 1, wherein the UV-Vis-NIR absorption intensity ratio is less than 0.20.

4. The copper-supported zeolite according to any one of Claims 1 to 3, wherein the copper-supported zeolite has a specific surface area of 570 m$^2$/g or more as measured by a BET one-point method.

5. The copper-supported zeolite according to any one of Claims 1 to 3, wherein the copper-supported zeolite has a specific surface area of 600 m$^2$/g or more as measured by a BET one-point method.

6. The copper-supported zeolite according to any one of Claims 1 to 5, wherein the copper-supported zeolite has a zeolite structure having a framework density of not less than 10.0 T/1,000 $\mathring{A}^3$ and not more than 16.0 T/1,000 $\mathring{A}^3$, the zeolite structure being defined by the International Zeolite Association (IZA).

7. The copper-supported zeolite according to any one of Claims 1 to 6, wherein the copper-supported zeolite has a zeolite structure being CHA, the zeolite structure being defined by the International Zeolite Association (IZA).

8. An exhaust gas purification catalyst comprising the copper-supported zeolite according to any one of Claims 1 to 7.

Fig. 1

Fig. 2

Fig. 3

## INTERNATIONAL SEARCH REPORT

| | International application No. |
|---|---|
| | PCT/JP2016/068959 |

A. CLASSIFICATION OF SUBJECT MATTER
*C01B39/54*(2006.01)i, *B01D53/94*(2006.01)i, *F01N3/10*(2006.01)n

According to International Patent Classification (IPC) or to both national classification and IPC

B. FIELDS SEARCHED

Minimum documentation searched (classification system followed by classification symbols)
C01B39/54, B01D53/94, F01N3/10

Documentation searched other than minimum documentation to the extent that such documents are included in the fields searched

| | | | | |
|---|---|---|---|---|
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2013-514257 A  (PQ Corp.),<br>25 April 2013 (25.04.2013),<br>paragraphs [0017] to [0060], [0068]<br>& WO 2011/084218 A2<br>paragraphs [0025] to [0060], [0068]<br>& US 2010/0092362 A1   & EP 2512988 A<br>& CN 102844096 A       & KR 10-2013-0019372 A | 1-8 |
| Y | JP 2015-044720 A  (Mitsubishi Plastics, Inc.),<br>12 March 2015 (12.03.2015),<br>paragraphs [0032] to [0042], [0121]<br>(Family: none) | 1-8 |
| P,A | WO 2015/146482 A1  (Mitsubishi Plastics, Inc.),<br>01 October 2015 (01.10.2015),<br>(Family: none) | 1-8 |

☐ Further documents are listed in the continuation of Box C.          ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 13 September 2016 (13.09.16) | 27 September 2016 (27.09.16) |

| Name and mailing address of the ISA/<br>Japan Patent Office<br>3-4-3,Kasumigaseki,Chiyoda-ku,<br>Tokyo 100-8915,Japan | Authorized officer<br><br><br>Telephone No. |
|---|---|

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013002059 A1

- JP 2015133637 A

**Non-patent literature cited in the description**

- *Journal of Catalysis,* 2014, vol. 312, 87-89
- *Dalton Transactions,* 2013, vol. 42, 12741-12761

- *Renewable Energy,* 2011, vol. 36, 3043-3049